# EUROPEAN PATENT APPLICATION

(11) **EP 2 717 085 A1**
(43) Date of publication of application: **09.04.2014**
(21) Application number: 12793473.5
(22) Date of filing: 31.05.2012
(51) Int. Cl.: G02C 7/10, G02B 1/10, G02B 5/23, G02C 7/02

(54) **PLASTIC LENS**

(30) Priority: 03.06.2011 JP 2011125264
(71) Applicant: HOYA Corporation, Tokyo 161-8525 (JP)
(72) Inventor: IMIZU Takeshi, Tokyo 161-8525 (JP); OHNISHI Tomofumi, Tokyo 161-8525 (JP); OTA Hiroshi, Tokyo 161-8525 (JP); HAMAMOTO Terufumi, Tokyo 161-8525 (JP)
(74) Representative: Betten & Resch
(86) International application number: PCT/JP2012/064167
(87) International publication number: WO 2012/165579

(57) **Abstract**

The present invention provides a plastic lens capable of suppressing deformation while having a photochromic film. A plastic lens according to the present invention is configured to include a plastic substrate formed in a meniscus shape with a concave surface and a convex surface, a photochromic film provided on the convex surface of the plastic substrate, and a stress compensation film provided on the concave surface of the plastic substrate.

## Description

### Technical Field

The present invention relates to a plastic lens for eyeglasses and the like. Particularly, it relates to a photochromic lens in which a photochromic film is formed on a lens substrate.

### Background Art

In recent years, photochromic lenses (also referred to as photochromatic lenses) made of plastic, obtained by applying an organic photochromic dye have been sold on the market for eyeglasses. These lenses produce color in the bright open air to thereby exert the same antiglare effect as a colored lens of high optical density, and recover high transmittance when moving into a room.

This photochromic function is given by forming a film made of a composition containing a photochromic dye on the surface of a lens. In forming such a photochromic film, securement of adhesiveness with a lens substrate and of film strength are required.

For example, in Patent Literature 1 below, it is described that, by forming a photochromic film through the use of a composition of specific components and blending ratio, adhesiveness to an optical substrate and film strength can be enhanced.

In particular, here, an ultraviolet ray-curable photochromic film is formed on a lens convex surface, and the optimum thickness thereof is set to be from 10 µm to 50 µm.

In addition, as described above, conventionally, a photochromic film is provided on a convex surface of a lens. This is because almost all lens substrates contain an ultraviolet-ray absorber for protecting the eyes of a user. Specifically, an ultraviolet-ray absorber that absorbs ultraviolet rays on shorter wavelength side than wavelength of 400 nm is contained. A photochromic film exhibits light-controlling action thereof by irradiation of ultraviolet rays. Therefore, when a photochromic film is provided on a lens rear surface (usually a concave surface), the absorption of ultraviolet rays by an ultraviolet-ray absorber or the like in a lens substrate does not allow sufficient ultraviolet rays to reach the photochromic film, and an intended light-controlling action is hardly obtained.

Accordingly, the provision of a photochromic film on the surface of the object side exhibiting no absorption of ultraviolet rays causes ultraviolet rays from outer circumstances to enter directly the photochromic film, and thus the film can exert a light-controlling action in accordance with outer circumstances.

### Citation List

### Patent Literature

PTL 1: Japanese Patent Laid-open No. 2007-77327

### Summary of Invention

### Technical Problem

However, when a photochromic film is formed on a plastic lens having a refractive index of 1.60 or more, in particular on a plastic lens substrate having a refractive index of 1.70 or more, sometimes the plastic lens substrate may be deformed in a process requiring heating at the time of manufacturing.

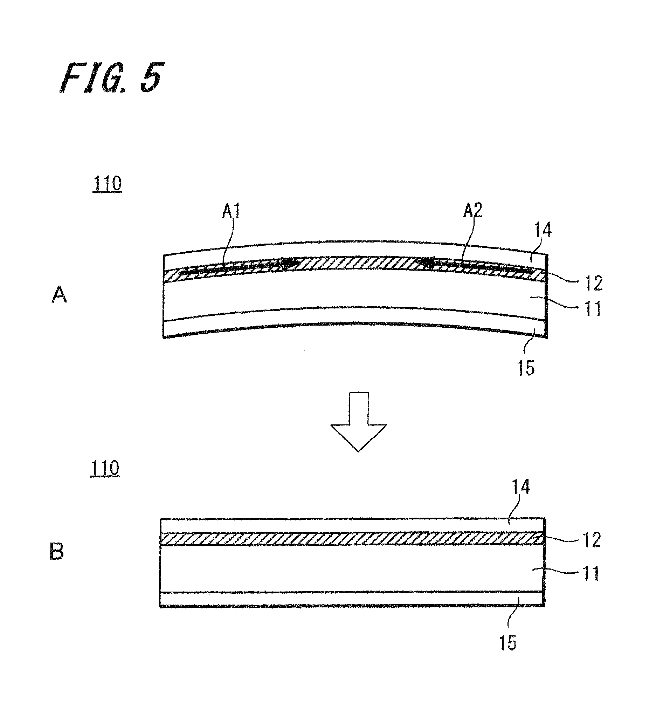

For example, explanation will be given using a plastic lens 110 shown in Figs. 5A and 5B. In the plastic lens 110 shown in Fig. 5A, a photochromic film 12 is formed on a convex surface side of a plastic substrate 11, and on the photochromic film 12, a hard coat layer 14 is provided. In addition, also on the concave surface of the plastic substrate 11, a hard coat layer 15 is provided.

At the time of heat curing of hard coat layers 14 and 15, a polymerization reaction advances in the photochromic film 12, and shrinkage of the photochromic film 12 is generated in the directions shown by arrows A1 and A2. Consequently, the plastic substrate 11 receives stress from the photochromic film 12, and the refracting surface of the plastic lens 110 is deformed into an approximately flat surface shape as shown in Fig. 5B and loses the initial refractive power.

In particular, since a thickness of a plastic lens having a refractive index of 1.60 or more is thinner than that of a lens having a lower refractive index, the above-mentioned phenomenon tends to be generated.

In addition, in order to avoid this, curing temperature of the hard coat layer should be lowered, but when the hard coat layer is formed at low temperatures, securement of sufficient shock resistance (film hardness) and film adhesiveness is difficult.

In view of the above, the present invention aims at providing a plastic lens capable of suppressing deformation while being provided with a photochromic film.

### Solution to Problem

In order to solve the above-mentioned problem, the plastic lens according to the present invention has a plastic substrate formed in a meniscus shape having a concave surface and a convex surface, and a photochromic film provided on the convex surface of the plastic substrate. Furthermore, the plastic lens has a stress compensation film provided on the concave surface of the plastic substrate.

According to the plastic lens of the present invention, stress generated by shrinkage of the photochromic film provided on the convex surface of the plastic substrate can be compensated for by stress generated by shrinkage of the stress compensation film provided on the concave surface of the plastic substrate.

Furthermore, photochromic dye may be incorporated in the stress compensation film. That is, the stress compensation film can be used also as a photochromic film provided on the concave surface of the plastic substrate.

Consequently, a produced color density of the plastic lens as a whole can be enhanced. In addition, even when the photochromic film provided on the convex surface of the plastic substrate is damaged, the produced color can be maintained by the stress compensation film.

### Advantageous Effects of Invention

According to the present invention, the stress applied to the plastic substrate by the photochromic film provided on the concave surface of the plastic substrate can be compensated for. Therefore, a high-quality plastic lens in which deformation is suppressed can be provided.

### Brief Description of Drawings

Fig. 1 is a schematic configuration diagram (cross-sectional view) showing the configuration of a plastic lens according to the present invention.
Fig. 2 is an explanatory view showing the curvature radius of a plastic lens before and after forming a hard coat layer.
Fig. 3 is an explanatory view showing the change of refractive power in a manufacturing process of a plastic lens.
Fig. 4 is an explanatory view showing the relationship between the thickness of a stress compensation film and an amount of change in the refractive power.
Fig. 5A is an explanatory view showing shrinkage of a photochromic film in a conventional plastic lens. Fig. 5B is an explanatory view showing a conventional plastic lens deformed.

### Description of Embodiments

Hereinafter, examples of embodiments of the present invention will be explained, but the present invention is not limited to the examples below. The explanation is performed in the order below.
1. Embodiments of plastic lens
   (1) Lens configuration
   (2) Plastic substrate
   (3) Primer layer
   (4) Photochromic film
   (5) Stress compensation film
   (6) Hard coat layer
   (7) Antireflection film
2. Examples

### 1. Embodiments of plastic lens

### (1) Lens configuration

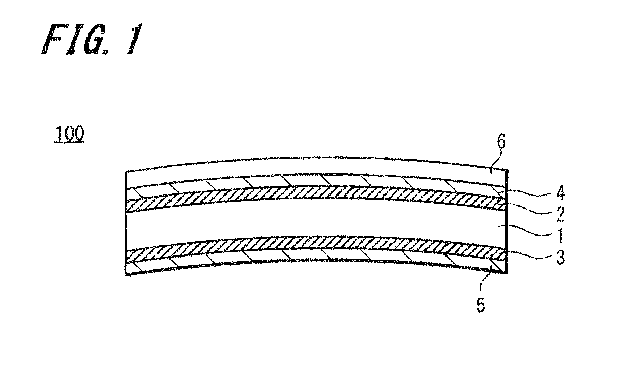

Fig. 1 is a schematic configuration diagram showing an example of cross-section configuration of a plastic lens 100 according to an embodiment of the present invention. Meanwhile, in the drawing, there is shown the outline of configuration, which does not limit dimension ratios and the like of respective sites.

The plastic lens 100 according to the present embodiment is in a meniscus lens shape, for example, having a convex surface on one face and a concave surface on the other face.

The plastic lens 100 of the present embodiment includes a plastic substrate 1 having a convex surface on one face and a concave surface on the other face, a photochromic film 2 formed on the convex surface of the plastic substrate 1, and a hard coat layer 4 formed on the photochromic film 2. In addition, on the hard coat layer 4, an antireflection film 6 is to be formed.

Furthermore, the plastic lens 100 according to the present embodiment includes a stress compensation film 3 provided on the concave surface of the plastic substrate 1, and a hard coat layer 5 formed on the stress compensation film 3.

Meanwhile, the antireflection film 6 may not necessarily be formed, and another film having another additional function may be provided.

The material of the plastic substrate 1 is not particularly limited. The hard coat layers 4 and 5, and the antireflection film 6 are also not particularly limited. Furthermore, between the above-mentioned plastic substrate 1 and respective films or respective layers, a primer layer not shown may be interposed.

Moreover, the material of the stress compensation film 3 may be the same as that of the photochromic film 2, but does not necessarily contain a photochromic dye. However, the material contains at least a curable component that is cured by a polymerization reaction and a polymerization initiator that accelerates the polymerization of the curable component.

In addition, on the photochromic film 2 and on the stress compensation film 3, for example as shown in Fig. 1, the hard coat layers 4 and 5 are stacked. When the thicknesses of the hard coat layers 4 and 5 are, for example, approximately from 1 µm to 3 µm, the layers can function as protective layers of the photochromic film 2 and the stress compensation film 3.

Furthermore, in order to enhance adhesiveness between the plastic substrate 1 and the stress compensation film 3, a primer layer not shown may be interposed between the plastic substrate 1 and the stress compensation film 3.

As described above, the plastic lens 100 according to the present embodiment has the stress compensation film 3 provided on the concave surface of the plastic substrate 1. Since, as described later, the stress compensation film 3 contains a curable component of the photochromic film and a polymerization initiator, for example, at the time of heat curing of the hard coat layers 4 and 5, thermal shrinkage is generated in the stress compensation film 3 as is the case with the photochromic film 2.

Consequently, stress applied to the plastic substrate 11 by thermal shrinkage of the photochromic film 2 provided on the convex surface can be compensated for by stress generated by thermal shrinkage of the stress compensation film 3 provided on the concave surface. Accordingly, suppression of deformation of a lens becomes possible, and a high-quality plastic lens can be provided.

In addition, the stress compensation film 3 may contain a photochromic dye. In this case, on both of the convex surface and the concave surface of the plastic substrate 1, a photochromic film is to be formed.

By providing a photochromic film also on the concave surface side of the plastic substrate 1, it is possible to cause the photochromic film on the concave surface side (stress compensation film 3) to absorb ultraviolet rays that have not been absorbed by the photochromic film 2.

That is, by causing the stress compensation film 3 to also produce color, it is possible to enhance utilization efficiency of ultraviolet rays entering the plastic lens 100, and to enhance the color density to be produced of the plastic lens 100.

For example, when a photochromic film is provided only on the convex surface of the plastic substrate 1, the transmittance of light to the plastic lens 100 is approximately 12 ± 1% for hue of gray in a temperature circumstance of 23°C, whereas, when photochromic films are provided on both surface of the plastic substrate 1, respectively, the photochromic layer on the concave surface side also produces color by ultraviolet rays entering the concave surface side, to thereby give transmittance of approximately 9 ± 1% and increase the optical density of produced color.

Furthermore, by providing the stress compensation film 3 as a photochromic film, even when the photochromic film 2 is damaged, it is possible to maintain color-producing performance by the stress compensation film 3.

Next, materials of respective parts of the plastic lens 100 will be described.

### (2) Plastic substrate

The material of the plastic substrate 1 for the use in the plastic lens of the present invention is not particularly limited.

Examples thereof include methylmethacrylate homopolymer, copolymer of methylmethacrylate and one or more kinds of other monomers, diethylene glycol bis(allylcarbonate) homopolymer, copolymer of diethylene glycol bis (allylcarbonate) and one or more kinds of other monomers, sulfur-containing copolymer, halogen copolymer, polycarbonate, polystyrene, polyvinyl chloride, unsaturated polyester, polyethylene terephthalate, polyurethane, polythiourethane, polymer using a compound having an epithio group as a raw material, homopolymer of a monomer having a sulfide bond, copolymer of sulfide and one or more kinds of other monomers, copolymer of polysulfide and one or more kinds of other monomers, and copolymer of polydisulfide and one or more kinds of other monomers.

Meanwhile, as to the surface shape of the substrate, other than the case of a so-called plastic substrate formed in a meniscus shape in which the objective side (in the case of substrate for eyeglasses, the face opposite to eyes) is formed in a convex shape and the other side (in the case of substrate for eyeglasses, the face on the side of eyes) is formed in a concave shape, an effect of suppressing deformation can be obtained in the same way, even when a substrate is formed in a biconvex shape or in a biconcave shape.

Furthermore, in order to cause the stress compensation film 3 to produce color and enhance the utilization efficiency of ultraviolet rays, as the plastic substrate 1, it is preferable to use a material which does not contain an ultraviolet-ray absorber or a material in which the content of an ultraviolet-ray absorber is adjusted to be smaller than that in usual cases, or which has ultraviolet-ray transmittance. Consequently, ultraviolet rays not having been absorbed by the photochromic film 2 can reach the stress compensation film 3.

For example, the plastic substrate 1 is preferably configured so that accumulated transmittance in a wave range of at least 300 nm to 420 nm is 14% or more, and more preferably configured so that accumulated transmittance in a wave range of 300 nm to 410 nm is 27% or more.

Examples of such materials of the plastic substrate 1 include diethylene glycol bis(allylcarbonate) (CR39, manufactured by PPG).

### (3) Primer layer

Between layers of the plastic substrate 1, the photochromic films 2 and 3, the hard coat layers 4 and 5, the antireflection films 6 and the like, a primer layer may suitably be formed if necessary.

A material for the use in the primer layer is not particularly limited as long as the material enhances adhesiveness or anti-shock properties and it does not exert an influence on optical properties when the plastic substrate is constituted by a high refractive index material. There can be used, for example, polyol, polyisocyanate, a blocking agent for an NCO group of a polyisocyanate, and materials containing metal oxide in addition to these.

Examples of usable polyol include polycarbonate polyol (for example, "Nippolan 980 series (trade name)" manufactured by NIPPON POLYURETHANE INDUSTRY CO., LTD., "Carbodiol (trade name)" manufactured by TOAGOSEI CO., LTD., etc.), polyether polyol (for example, "ADEKApolyether (trade name) manufactured by ADEKA COPORATION, "Actocall PPG-Diol series (trade name)" manufactured by MITSUI CHEMICALS POLYURETHANES, INC., etc.), acrylic polyol (for example, "Takerac (registered trade mark)" manufactured by MITSUI CHEMICALS POLYURETHANES, INC., "ACRYDIC (registered trade mark)" manufactured by DIC Corporation (formerly Dainippon Ink And Chemicals, Incorporated) etc.), polyester polyol (Polylight (registered trade mark) manufactured by DIC Corporation, "Kuraray polyol series (trade name)" manufactured by Kuraray Co., Ltd.) or the like.

Examples of usable polyisocyanate include polyisocyanate or modified products thereof such as polyisocyanate hexamethylene diisocyanate, 1,3,3-trimethylhexamethylene diisocyanate, isophorone diisocyanate, 4,4'-dicyclohexylmethane diisocyanate, xylylene diisocyanate, tetramethylxylylene diisocyanate, hydrogenerated xylylene diisocyanate, tolylene diisocyanate, diphenylmethane diisocyanate, hydrogenerated diphenylmethane diisocyanate, 1,5-naphthalene diisocyanate, tetramethylxylylene diisocyanate, isocyanurate, allophanate, buret or carbodiimide, adduct product such as trimer thereof or the like.

As a blocking agent of an NCO group of polyisocyanate, β-diketone and methyl ethyl ketoxime are preferable, and acetylacetone, 2,4-hexanedione, 3,5-heptanedione, acetoxime, methyl ethyl ketoxime, caprolactam or the like can be used.

In addition, to such a primer composition, a metal oxide may be added in order to enhance the refractive index. As the metal oxide, metal oxides including one or more kinds or two or more kinds of metals selected from Si, A1, Sn, Sb, Ta, Ce, La, Fe, Zn, W, Zr, In and Ti, and, furthermore, sol forming a metal oxide fine particle can be used.

Particularly, when the primer layer is formed of a material obtained by mixing urethane resin and rutile-type titania sol, excellent adhesiveness and a comparatively high refractive index are given, and since a rutile crystal TiO₂ suppresses photoactivity, it has an advantage of being able to suppress the lowering of weather resistance.

Furthermore, when the primer layer is formed of a material obtained by mixing zirconia sol, there is an advantage that the lowering of weather resistance can be further suppressed.

Usable solvents include glycols such as ethylene glycol monomethyl ether acetate, ethylene glycol monoethyl ether acetate, ethylene glycol monopropyl ether acetate, ethylene glycol monobutyl ether acetate, propylene glycol monomethyl ether acetate, propylene glycol monoethyl ether acetate, propylene glycol monopropyl ether acetate, propylene glycol monobutyl ether acetate, ethylene glycol dimethylether, ethylene glycol diethylether, ethylene glycol dipropylether, ethylene glycol dibutylether, diethylene glycol dimethylether, diethylene glycol diethylether, diethylene glycol dipropylether, diethylene glycol dibutylether, propylene glycol dimethylether or propylene glycol diethylether, or the like.

Furthermore, in addition to this, as a leveling agent, copolymer of polyoxyalkylene and polydimethylsiloxane, copolymer of polyoxyalkylene and fluorocarbon or the like can be used.

### (4) Photochromic film

The photochromic film 2 is formed by coating, on the plastic substrate 1, a coating liquid having photochromic dye and by curing the same.

The coating liquid can include a curable component (matrix), photochromic dye, a polymerization initiator, and an additive that is added arbitrarily. A method of preparing the coating liquid is not particularly limited, but can be performed by weighing predetermined amounts of respective components and mixing them.

The coating liquid has viscosity at 25°C of preferably 20 to 500 cp, more preferably 50 to 300 cp. Furthermore, particularly preferably the viscosity is from 60 to 200 cp. By setting the viscosity in this range, the coating of the coating liquid becomes easier, and a photochromic film of an intended thickness can be obtained easily.

The curable component usable for forming the photochromic film is not particularly limited, but examples thereof usable include a known photo-polymerizable monomer and oligomer having a radical-polymerizable group such as a (meth)acryloyl group, a (meth)acryloyloxy group, a vinyl group, an aryl group or a styryl group, and a prepolymer thereof. Meanwhile (meth)acryloyl denotes both acryloyl and methacryloyl.

In the case of an acrylic material, the film is subjected to UV-curing after the coating, and, in the case of a urethane-based material, the film is subjected to a heat-curing treatment, to be completed as a film, respectively.

As a specific curable component, components described in Japanese Patent Laid-Open No. 2008-33223, Japanese Patent Laid-Open No. 2007-77327 or the like can be used.

In addition, the photochromic dye compound is not also particularly limited, but known one may be used.

Examples thereof include photochromic dye compounds such as a fulgide compound, a spirooxazine compound and a chromene compound.

Furthermore, as the photochromic dye, the one expressing a photoisomerization reaction on shorter wavelength side of visible light is preferable. Specific wavelengths are 420 nm or less, preferably 410 nm or less. Light of the wavelengths is included abundantly in the sunlight, but exists in smaller quantities under circumstances of the inside of a room or of usual lighting. Accordingly, the plastic lens of the present invention suppresses color production indoors, but can produce color in outdoor circumstances.

In addition, as additives, for enhancing durability of photochromic dye, enhancing a color-production rate, enhancing a color-fading rate, enhancing moldability or the like, there may be added additives such as a surfactant, an antioxidant, a radical scavenger, an ultraviolet-ray stabilizing agent, an ultraviolet-ray absorber, a mold-releasing agent, a color-production inhibitor, an antistatic agent, fluorescence dye, dye, pigment and a plasticizer. As these additives, known compounds can be used without particular limitation.

### (5) Stress compensation film

The stress compensation film 3 is constituted to contain a curable component that is cured by a polymerization reaction, and a polymerization initiator that accelerates the polymerization reaction of the curable component. Particularly, as the curable component, there is used a material in which thermal shrinkage is generated at heat-curing temperature of the hard coat layers 4 and 5. Consequently, stress applied to the plastic substrate 1 by thermal shrinkage of the photochromic film 2 can be compensated for by stress applied to the plastic substrate 1 by thermal shrinkage of the stress compensation film 3.

As the curable component and the polymerization initiator, the same ones as the curable component and the polymerization initiator of a so-called photochromic film can be used. Accordingly, the curable component and the polymerization initiator can be used by being suitably selected from the materials of the curable component and the polymerization initiator of the photochromic film 2.

The curable components and polymerization initiators of the photochromic film 2 and the stress compensation film 3 may be completely the same or may be different, respectively.

In addition, the stress compensation film 3 may contain the above-mentioned additive.

Furthermore, the stress compensation film 3 may contain photochromic dye, and may be formed as a second photochromic film provided on the concave surface side of the plastic substrate 1. The photochromic dye is not particularly limited, but known one can be used.

Meanwhile, in this case, the configuration of the stress compensation film 3 may be the same as the configuration of the photochromic film 2. Consequently, the photochromic film 2 and the stress compensation film 3 can be formed of the same photochromic liquid, and the process can be made simpler.

### (6) Hard coat layer

On the upper surface of the photochromic film 2 and the stress compensation film 3, the hard coat layers 4 and 5 are provided, respectively, as a hard film.

The material of the hard coat layers 4 and 5 is not particularly limited, but a coating liquid including a known organosilicon compound and a known metal oxide colloidal particle can be used. After coating the coating liquid, by a curing treatment, the hard coat layer can be obtained.

Examples of the organosilicon compounds include organosilicon compounds represented by a general formula (I) below and hydrolyzed products thereof.

(R⁹¹)_{a'}(R⁹³)_{b'}Si(OR⁹²)_{4-(a'+b')} (I)

(In the formula, R⁹¹ represents an organic group having a glycidoxy group, an epoxy group, a vinyl group, a methacryloxy group, an acryloxy group, a mercapto group, an amino group or a phenyl group etc., R⁹² represents an alkyl group having 1 to 4 carbons, an acyl group having 1 to 4 carbons or an aryl group having 6 to 10 carbons, R⁹³ represents an alkyl group having 1 to 6 carbons or an aryl group having 6 to 10 carbons, and a' and b' each represents an integer of 0 or 1.)

Examples of the alkyl groups having 1 to 4 carbons of the above-mentioned R⁹² include a linear or branched methyl group, ethyl group, propyl group, butyl group and the like.

Examples of the acyl groups having 1 to 4 carbons of the above-mentioned R⁹² include an acetyl group, a propionyl group, an oleyl group, a benzoyl group and the like.

Examples of the aryl groups having 6 to 10 carbons of the above-mentioned R⁹² include a phenyl group, a xylyl group, a tolyl group and the like.

Examples of the alkyl groups having 1 to 4 carbons of the above-mentioned R⁹³ include a linear or branched methyl group, ethyl group, propyl group, butyl group, pentyl group, hexyl group and the like.

Examples of the aryl groups having 1 to 10 carbons of the above-mentioned R⁹³ include a phenyl group, a xylyl group, a tolyl group and the like.

Examples of the metal oxide colloidal particles include tungsten oxide (WO₃), zinc oxide (ZnO), silicon oxide (SiO₂), aluminum oxide (Al₂O₃), titanium oxide (TiO₂), zirconium oxide (ZrO₂), tin oxide (SnO₂), beryllium oxide (BeO), antimony oxide (Sb₂O₅) etc., which can be used alone or in combination of two or more kinds.

### (7) Antireflection film

In addition, on the hard coat layers 4 and 5, particularly on the hard coat layer 4 on the convex surface of the plastic substrate 1, the antireflection film 6 may be formed. The material and formation method of the antireflection film 6 are also not particularly limited, but a single layer film or a multi layer film including a known inorganic oxide can be used.

Examples of the inorganic oxides include silicon dioxide (SiO₂), zirconium oxide (ZrO₂), aluminum oxide (Al₂O₃), niobium oxide (Nb₂O₅), yttrium oxide (Y₂O₃) and the like.

Furthermore, there can also be used an organic antireflection film of a single layer or multi layers, which includes an organosilicon compound and an inorganic fine particle, and the refractive index of which is adjusted by the kind of the inorganic fine particle.

### 2. Example

### <Example 1>

Hereinafter, Examples of plastic lenses according to the present invention will be described.

### (1) Preparation of photochromic liquid

First, in a plastic vessel, there were prepared 100 parts by mass of radical-polymerizable monomers that includes 20 parts by mass of trimethylolpropane trimethacrylate, 35 parts by mass of BPE oligomer (2,2-bis(4-methacryloyloxypolyethoxyphenyl)propane), 10 parts by mass of EB6A (polyester oligomer hexaacrylate), 10 parts by mass of polyethylene glycol diacrylate having an average molecular weight of 532 and 10 parts by mass of glycidyl methacrylate.

Next, there were added, as ultraviolet polymerization initiators, 3 parts by mass of chromene as a photochromic dye, 5 parts by mass of LS765 (bis(1,2,2,6,6-pentamethyl 4-piperidyl)sebacate and methyl (1,2,2,6,6-pentamethyl 4-piperidyl)sebacate) as antioxidants, 0.4 parts by mass of CGI-184 (1-hydroxycyclohexyl phenyl ketone) and 0.1 part by mass of CGI403 (bis(2,6-dimethoxybenzoyl-2,4,4-trimethylpentylphosphineoxi de) as ultraviolet polymerization initiators.

### (2) Formation of primer layer

On a convex surface of a plastic substrate (EYRY (registered trade mark), S-2. 00 manufactured by HOYA), a water dispersion of polyurethane having an acrylic group introduced in a polyurethane skeleton (polycarbonate polyol-based polyurethane emulsion) was coated by spin coating at 1100 rpm, and heat-curing of the resultant coated material for 90 minutes at 70°C was caused to form a primer layer. After that, coating and heat-curing of the same water dispersion also on the concave surface of the plastic substrate were caused to form a primer layer.

### (3) Formation of photochromic film and stress compensation film

[1] About 2 g of the adjusted photochromic liquid was weighed, which was dropped on the convex surface of the above-mentioned plastic substrate on which the primer layer had been formed. Then, after spin coating was performed at 600 rpm for 5 seconds, a UV lamp performed irradiation with ultraviolet rays for 90 seconds, to thereby cure the photochromic liquid.
[2] Subsequently, on the concave surface of the plastic substrate, the above-mentioned photochromic liquid was dropped and spin coating was performed at 600 rpm for 7 seconds. After that, a UV lamp performed irradiation with ultraviolet rays for 40 seconds to thereby cure the photochromic liquid, and to form a stress compensation film.

### (4) Formation of hard coat layer

[3] After that, an annealing treatment was performed for 90 minutes at 70°C.
[4] Next, into a stainless steel vessel provided with a stirring function kept at from 10°C to 15°C, 280 parts by weight of water-dispersed colloidal silica having SiO₂ concentration of 40% (Cataloid SI-40 manufactured by JGC C&C) was put, and 4 parts by weight of 0.6 N hydrochloric acid and 60 parts by weight of acetic acid were added with stirring. Then, 150 parts by weight of y-glycidoxy propyl trimethoxysilane was dropped, which was stirred for 24 hours. Furthermore, with stirring, 100 parts by weight of methyl cellosolve, 300 parts by weight of isopropyl alcohol, and 100 parts by weight of n-butanol were added in this order, 15 parts by weight of aluminum acetylacetone was added as a curing agent at a stage at which homogeneity was achieved, and further stirring of the resultant material all day and night was caused to make a hard coat liquid.

Then, on the convex surface side and on the concave surface side of the plastic substrate described above, the hard coat liquid was coated, and a heat-curing treatment of the resultant coated material for 60 minutes at 100°C was caused to form a hard coat layer.

According to the above processes, three plastic lenses were manufactured, and for each of the plastic lenses, the curvature radius immediately after the curing of the photochromic liquid and the curvature radius after a heat-curing treatment for 60 minutes at 100°C were measured, respectively.

### <Example 2>

In the same way as in Example 1 except that the photochromic liquid was coated on the concave surface of the plastic substrate by spin coating for 12.5 seconds at 900 rpm and the stress compensation film was formed, two plastic lenses were manufactured, for which the change in the refractive power of the plastic lenses was examined for every process described above.

### <Example 3>

In the same way as in Example 2 except that the photochromic liquid was coated on the concave surface of the plastic substrate by spin coating for 12.5 seconds at 800 rpm and the stress compensation film was formed, two plastic lenses were manufactured.

### <Example 4>

In the same way as in Example 2 except that the photochromic liquid was coated on the concave surface of the plastic substrate by spin coating for 12.5 seconds at 700 rpm and the stress compensation film was formed, a plastic lens was manufactured.

### <Example 5>

In the same way as in Example 2 except that the photochromic liquid was coated on the concave surface of the plastic substrate by spin coating for 12.5 seconds at 600 rpm and the stress compensation film was formed, a plastic lens was manufactured.

### <Comparative Example 1>

In the same way as in Example 1 except that the photochromic film and the stress compensation film were not formed on both the convex surface and the concave surface of the plastic substrate, three plastic lenses were manufactured.

### <Comparative Example 2>

In the same way as in Example 1 except that the photochromic film was formed only on both the convex surface of the plastic substrate, three plastic lenses were manufactured.

### <Comparative Example 3>

In the same way as in Example 2 except that the photochromic film was formed only on both the convex surface of the plastic substrate, two plastic lenses were manufactured.

### 3. Experimental results

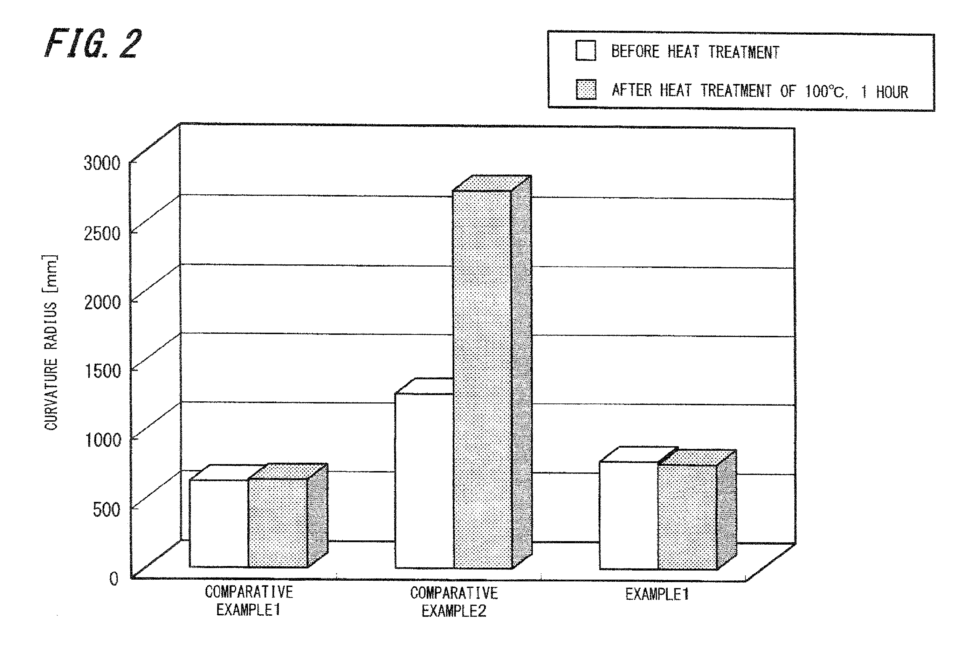

In Table 1, there are shown results of measuring, respectively, curvature radii for plastic lenses in Example 1 and Comparative Examples 1 and 2, before and after performing a heat-curing treatment (100°C, 60 minutes) of the hard coat layer. In addition, Fig. 2 is a column graph showing average values of respective Examples and <Comparative Examples in Table 1.

Meanwhile, the curvature radius is a value including the thickness of the hard coat layer on the convex surface side of the plastic lens.

**[Table 1]**

| | No. | BEFORE HEAT TREATMENT [mm] | AFTER HEAT TREATMENT FOR 1 HOUR AT 100°C [mm] |
|---|---|---|---|
| COMPARATIVE EXAMPLE1 | 1 | 630.4 | 643 |
| | 2 | 629.2 | 638.9 |
| | 3 | 620.3 | 632.4 |
| | Ave. | 626.6 | 638.1 |
| COMPARATIVE EXAMPLE2 | 1 | 1434.5 | 1844.3 |
| | 2 | 1397.4 | 3061.1 |
| | 3 | 951.4 | 3293.5 |
| | Ave. | 1261.1 | 2733 |
| EXAMPLE1 | 1 | 755.4 | 732 |
| | 2 | 805.6 | 744.6 |
| | 3 | 764.7 | 789.8 |
| | Ave. | 775.2 | 755.5 |

In Comparative Example 1 in which no photochromic film is provided on both of the convex surface and the concave surface of the plastic substrate, the plastic substrate is subjected to a small stress in the heat-curing treatment of the hard coat layer. Consequently, the curvature having been 626.6 mm on average before the heat-curing treatment of the hard coat layer was 638.1 mm on average after the heat-curing treatment, and no big change is generated.

On the other hand, in Comparative Example 2 in which the photochromic film is provided only on the convex surface of the plastic substrate, the curvature having been 1261.1 mm on average before the heat-curing treatment became 2733.3 mm on average after the heat-curing treatment, to thereby show remarkable increase. This is because the photochromic film provided on the convex surface of the plastic substrate causes thermal shrinkage in the heat-curing treatment to generate stress in the direction of warping the curved surface of the plastic substrate toward the opposite direction.

In contrast to this, in Example 1 in which the stress compensation film is provided on the concave surface of the plastic substrate, the curvature radius having an average value of 775.2 mm before the heat-curing treatment was 755.5 mm after the heat-curing treatment. In the same way as in Comparative Example 1 in which no photochromic film is provided on the plastic substrate, in Example 1, the curvature radius has scarcely changed.

From this, it can be understood that the stress generated by the thermal shrinkage of the photochromic film provided on the convex surface of the plastic substrate can be compensated for by the stress generated by the thermal shrinkage of the stress compensation film provided on the concave surface of the plastic substrate.

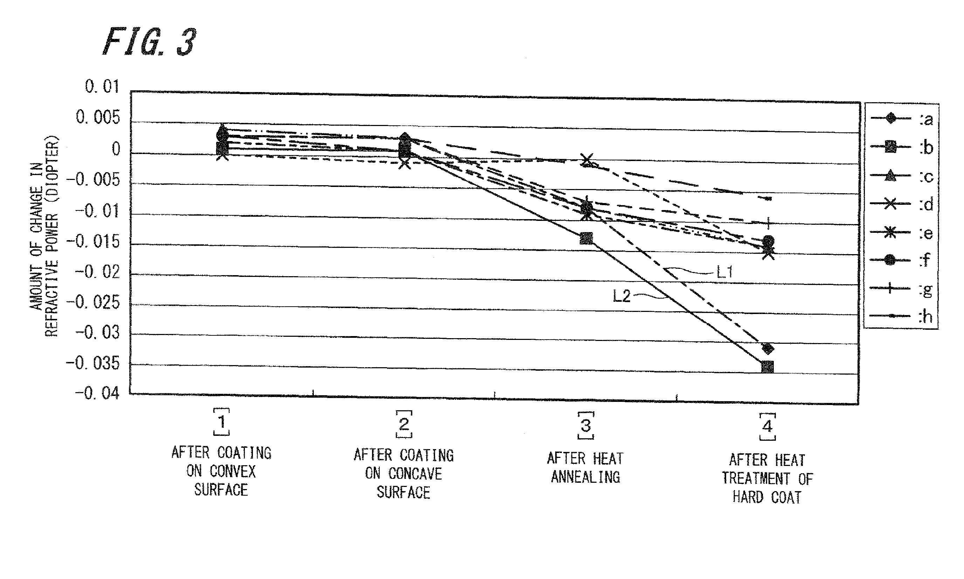

Furthermore, in Comparative Example 2 and Example 2 to Example 5 in Table 2 and Fig. 3, there are shown results of examining the change in the refractive power of plastic lenses, in respective cases of [1] immediately after forming the photochromic film on the convex surface of the plastic substrate, [2] immediately after forming the stress compensation film on the concave surface of the plastic substrate, [3] immediately after performing annealing for 90 minutes at 70°C, and [4] immediately after coating a hard coat liquid and then performing a heat-curing treatment for 60 minutes at 100°C.

In addition, in Table 3, initial curvature radii of plastic substrates are shown.

**[Table 2]**

| | SYMBOL | CORRECTED FILM THICKNESS [*µ*m] | AFTER COATING ON CONVEX SURFACE [*µ*m] | AFTER COATING ON CONCAVE SURFACE [*µ*m] | AFTER HEAT ANNEALING [*µ*m] | AFTER HEAT TREATMENT OF HARD COAT [*µ*m] |
|---|---|---|---|---|---|---|
| COMPARATIVE EXAMPLE2 | a | 0 | 0.003 | 0.003 | -0.008 | -0.031 |
| | b | 0 | 0.001 | 0.001 | -0.013 | -0.034 |
| EXAMPLE2 | c | 17.3 | 0.004 | 0.003 | -0.008 | -0.014 |
| | d | 17.3 | 0 | -0.001 | - | -0.015 |
| EXAMPLE3 | e | 19.6 | 0.002 | 0.001 | -0.009 | -0.014 |
| | f | 19.6 | 0.003 | 0.001 | -0.008 | -0.013 |
| EXAMPLE4 | g | 22.8 | 0.003 | 0.003 | -0.007 | -0.01 |
| EXAMPLE5 | h | 26 | 0.004 | 0.003 | -0.001 | -0.006 |

**[Table 3]**

| | SYMBOL | CURVATURE RADIUS OF CONVEX SURFACE [mm] | CURVATURE RADIUS OF CONCAVE SURFACE [mm] |
|---|---|---|---|
| COMPARATIVE EXAMPLE1 | a | 781.5 | 767.8 |
| | b | 607.1 | 584 |
| EXAMPLE2 | c | 699.1 | 689 |
| | d | 683 | 646.6 |
| EXAMPLE3 | e | 688.5 | 669.4 |
| | f | 670.8 | 638.8 |
| EXAMPLE4 | g | 715.5 | 698.1 |
| EXAMPLE5 | h | 758.3 | 745.7 |

As shown in Fig. 3, immediately after formation of the photochromic film or the stress compensation film on the convex surface and the concave surface of the plastic substrate, almost no change in the refractive power is generated.

However, immediately after the heat annealing, in Comparative Example 2 shown by symbol a (line L1) and symbol b (line L2), the refractive power begins to become smaller, and after the heat-curing treatment of the hard coat layer, the refractive power lowers remarkably. That is, it can be understood that the shrinkage of the photochromic film is generated at the time of the heat-curing treatment of the hard coat layer.

In contrast, in Examples 2 to 5 shown by symbol c to symbol h, the change in the refractive power is small, and the lowering of the refractive power can be suppressed.

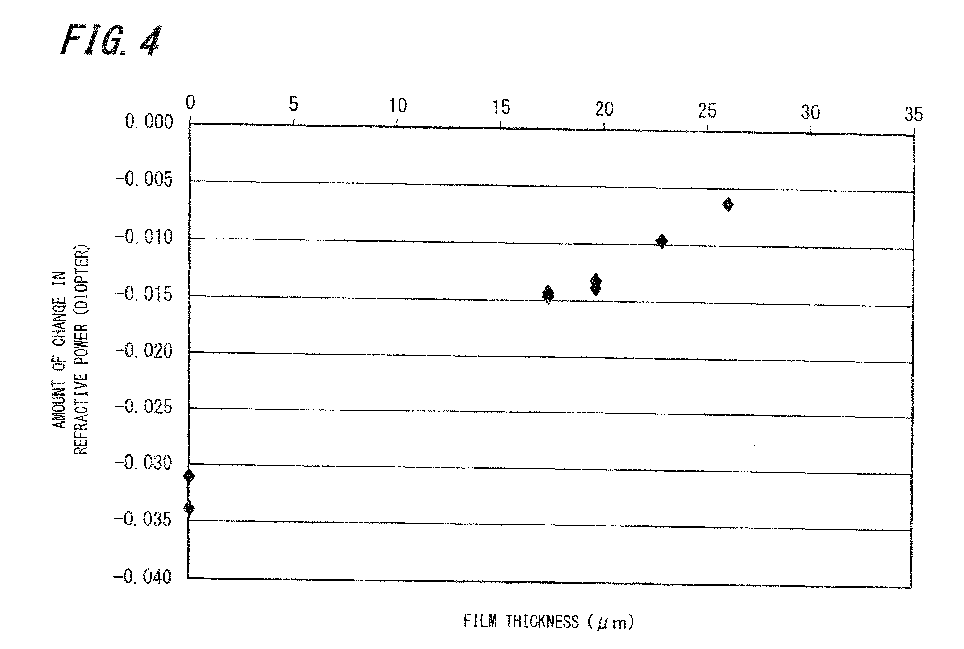

Thicknesses of the stress compensation films provided on the concave surface of the plastic substrate of the plastic lenses in Example 2 to Example 5 differ from each other. The relationship between the thickness of the stress compensation film and the change in the refractive power after an overheated curing treatment of the hard coat layer is shown in Fig. 4. The abscissa axis shows the thickness of the stress compensation film, and the ordinate axis shows the amount of change in the refractive power of the plastic lens immediately after heat-curing the hard coat layer.

As shown in Table 3 and Fig. 4, the relationship between the thickness of the stress compensation film and the amount of change in the refractive power is close to an approximate linear line, irrespective of the curvature radius of the plastic substrate. For example, when the thickness of the stress compensation film is 18 µm or more, the amount of change in the refractive power is less than -0.015 diopter, from which it is understood that, as compared with the case where no stress compensation film is provided, the amount of change in the refractive power can be made 1/2 or less.

As described above, in the plastic lens according to the present invention, since the stress compensation film is provided on the concave surface of the plastic substrate, deformation due to the shrinkage of the photochromic film provided on the convex surface can be suppressed. Accordingly, a high-quality plastic lens can be provided.

Furthermore, when the stress compensation film is configured by the photochromic film, the photochromic film is to be disposed doubly on the convex surface and the concave surface, and thus the density of produced color can be enhanced.

Hereinbefore, embodiments and Examples of the plastic lenses according to the present invention have been explained. It is needless to say that the present invention is not limited to the above-mentioned embodiments but includes various forms that can be further considered as long as they do not deviate from the gist of the present invention described in the claims.

### Reference Signs List

1, 11: plastic substrate, 2, 12: photochromic film, 3: stress compensation film, 4, 5, 14, 15: hard coat layer, 6: antireflection film, 100: lens

## Claims

1. A plastic lens, comprising:
a plastic substrate formed in a meniscus shape having a concave surface and a convex surface;
a photochromic film provided on the convex surface of the plastic substrate; and
a stress compensation film provided on the concave surface of the plastic substrate.

2. The plastic lens according to claim 1, wherein the stress compensation film contains a curable component and a polymerization initiator of the photochromic film.

3. The plastic lens according to claim 2, comprising a hard coat layer formed on the photochromic film.

4. The plastic lens according to claim 1 or 2, wherein the stress compensation film further contains a photochromic dye.
